# EUROPEAN PATENT SPECIFICATION

(11) **EP 1 036 280 B1**
(45) Date of publication and mention of the grant of the patent: **25.02.2004**
(21) Application number: 98962719.5
(22) Date of filing: 02.12.1998
(51) Int. Cl.: F16B 21/18, F16B 3/04, F16B 17/00, B60G 7/00

(54) **Device for holding two objects together**
Vorrichtung zum Zusammenhalten von Gegenständen
Dispositif maintenant deux objets ensemble

(30) Priority: 02.12.1997 NO 975563
(43) Date of publication of application: 20.09.2000
(73) Proprietor: Kongsberg Automotive ASA, 3601 Kongsberg (NO)
(72) Inventor: BJORKGARD, Sven, N-3600 Kongsberg (NO); ANDERSEN, Arne, /// (NO)
(74) Representative: Valentine, Francis Anthony Brinsley
(86) International application number: PCT/NO1998/000356
(87) International publication number: WO 1999/028636

(56) References cited:
- EP-A1- 0 633 128
- US-A- 3 374 015
- US-A- 3 832 076
- US-A- 4 225 263
- US-A- 5 092 704

## Description

The invention relates to use of a device comprising a first and second object, wherein the first object has a pin, whose free end section projects into a hole of the second object, and the device impedes axial relative movement of the pin in the hole, where there is provided in the hole wall a groove which extends along a transverse plane in relation to the hole's longitudinal axis and is tapered in the direction away from the hole, in which groove there is inserted a stopper with a first section which projects into the groove and a second section which projects away from the groove and into the hole, and the first object further comprises an element which may be tightened axially towards the end section, and the pin and the element near the hole wall have mutually opposing edge areas, which are arranged to abut against and by drawing together the element and the pin, to securely clamp between them the second section of the stopper, at least one of the edge areas being chamfered in such a manner that it extends away from the opposite edge area and towards the hole wall, when the pin and the element are disposed in the hole.

In US-A-4225263 it is disclosed a device for holding together two objects where a first object comprises a pin projecting into a hole in the second object, a groove in the wall of the hole receiving a stop member. The groove tapers and the stop member is clamped between edge areas of the pin and an element, at least one of the edge areas being chamfered.

A similar device is disclosed in US-A-3374015.

From the prior art there are known universal joints with two mutually cooperating joint members, where one joint member comprises a pin which extends into a cylindrical boring of a first, convexly ball-shaped bearing member or cup of this joint member. The second joint member comprises a second, concavely ball-shaped bearing member or cup which is arranged on the outside of the first bearing cup, and which can slide thereon. The first bearing cup is hereby axially secured on the pin via two spring rings, each of which is arranged in its groove in the pin.

On account of the large tolerances required as a result of mounting two spring rings, in this universal joint an axial clearance or play is obtained between the first bearing cup and the pin and thereby impacts between these components, whereby due to the unavoidable wear the play becomes greater. Furthermore, this bearing cup may rotate on the pin, which is usually unintentional, no sliding surface being provided between these parts. A radial wear may thereby also be incurred on cylinder sections of these parts.

It is further known from the prior art that a wheel axle housing for a vehicle can be secured laterally in a chassis of the vehicle by means of a similar universal joint, where a first joint member of the universal joint is securely connected to a section of the axle housing between the wheel and the vehicle, and comprises a pin and a convexly ball-shaped sleeve into which the pin is passed. The universal joint's second joint member is connected to one end section of two arms, each of which extends substantially horizontally and slantingly in its own direction relative to the chassis's longitudinal direction, and whose second end sections are connected to respective, longitudinal chassis beams of the vehicle.

To avoid play between the pin and the sleeve, the pin and the sleeve have conical surfaces and tension elements which are designed complementarily to each other whereby the pin and the sleeve are kept axially pressed together.

However, pins and sleeves designed in this manner are expensive and do not exist in the trade as standardised products.

The object of the invention is to provide a device of the type mentioned in the introduction which can be used for the above-mentioned purpose, but which is not encumbered with the above-mentioned drawbacks.

The invention will now be described in more detail with reference to the drawing which schematically illustrates embodiments of a device used according to the invention as defined in claim 1.
Fig. 1 is a longitudinal section through a pin and a sleeve according to a first embodiment of the device according to the invention in its most general form.
Fig. 2 is an enlarged section of an area corresponding to that which is defined by a circle with broken lines in fig. 1, but which illustrates a second embodiment of the device according to the invention.
Fig. 3 is a longitudinal section resembling that shown in fig. 2, but illustrating a third embodiment of the device according to the invention.
Fig. 4 is a perspective view of a section of a vehicle chassis with a universal joint for lateral securing of a wheel axle.
Fig. 5 is a longitudinal section through a universal joint which is illustrated in fig. 4.

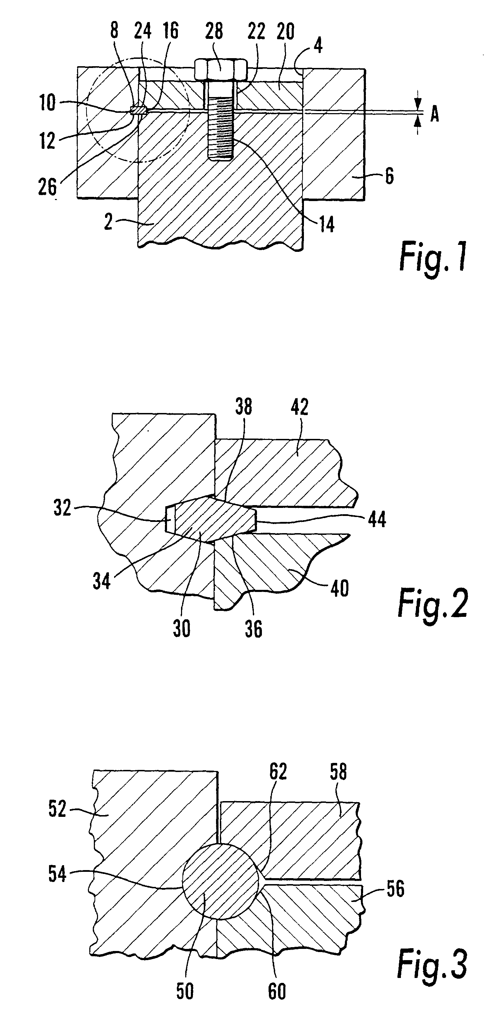

As illustrated in fig. 1, a pin 2 is inserted in a boring 4 of a sleeve 6 from one end of the boring 4. In a groove 8 in the boring 4 there is inserted a stopper 10 which may be in the form of a short rod which is rectangular in cross section and which may be slightly curved. A first side section 12 of the stopper 10 projects into the groove 8, whereby between the groove 8 and the stopper there may be, e.g., a very snug fit or a tight fit, with the result that there is no clearance between them. In the pin 2 there is provided a central hole 14 which is provided with screw threads.

From the second end of the boring 4 a tension element 20 is inserted therein which is in the form of a plate with a contour corresponding, e.g., to the contour of the pin 2, viewed in the boring's longitudinal direction. Through a central section of the tension element 20 there is provided a boring 22.

At opposite edge areas of the tension element 20 and the pin 2 respectively there is provided a recess 24, 26, which together partly engage a second side section 16 of the stopper 10, i.e. the section thereof which projects out of the groove 8 and into the boring 4. Between the tension element 20 and the pin 2 there exists a small clearance A when the pin 2 and the tension element 20 abut against the stopper 10 and its second section 16 is received in the recesses 24 and 26.

Through the tension element's boring 22 there is passed a screw 28 which is screwed into the hole 14 of the pin 2, and which is tightened in such a manner that the tension element 20 is pulled forcefully towards the pin 2, and in such a manner that the stopper 10 is firmly secured between them.

When mounting the pin 2 in the sleeve 6 the stopper 10 is first placed in the groove 8. The pin 2 is then inserted in the hole 4 from one end thereof, the second section 16 of the stopper 10 which projects into the hole 4 coming into abutment against the pin 2 in its recess 26. The tension element 20 is then inserted in the hole 4 from the second end and in such a manner that the stopper's second section 16 comes into abutment against the tension element 20 in its recess 24. Thereafter the screw 28 is passed through the boring 22 of the tension element 20 and screwed into the hole 14 of the pin 2 and tightened, with the result that the tension element 20 and the pin 2 come into forceful abutment against the stopper 10. An axial securing of the pin 2 in the sleeve 6 is thereby achieved without play. A relative rotation of the pin and the sleeve can hereby be prevented since the stopper comes into abutment against the end sections of the groove and the recesses.

In fig. 2 a second embodiment of a stopper 30 is illustrated, this too being in the form of a short rod. In this case, however, the groove 32 extends taperingly into the sleeve 6 and the first section 34 of the rod's cross section is formed in a corresponding complementarily tapering fashion. Moreover, recesses 36, 38 of the pin 40 and the tension element 42 are provided as chamfers which extend towards each other and towards the pin's and the tension element's central section. The second side section 44 of the stopper 30 is formed in such a manner that surface sections thereof remaining lying flat against the respective chamfers 36, 38. Moreover, in this case a screw is also provided for drawing the tension element and the pin together.

In this second embodiment of the device according to the invention, the stopper is pushed radially outwards, i.e. into the groove 32 when the tension element 42 is forcefully pushed towards the pin 40. The pin 40 is thereby very well secured axially relative to the sleeve, without the need thereby to prepare the groove 32 and the stopper 34 in order to obtain a snug relative fit. Furthermore, a relative rotation of the sleeve on the pin is thereby prevented, without play.

Fig. 3 illustrates a third embodiment of the device according to the invention, wherein there is provided a stopper 50 which is circular in cross section. In the sleeve 52 there is provided a groove 54 with a cross section approximately corresponding to a semi-circle, and in a pin 56 and a tension element 58 there are provided recesses 60 and 62 respectively, whose opposite surfaces in cross section are in the form of circular arcs. The diameter of the circle for the groove's cross section may be slightly larger than the diameter of the stopper 50.

It will be understood that features from the above-described embodiments may be combined and that the grooves and the stoppers may also be designed differently without deviating from the concept of the invention. For example, when using a stopper 50 which is circular in cross section according to the third embodiment of the invention, a groove with slanting surfaces may be provided similar to the groove 32 in the second embodiment of the invention, instead of a groove 54 which is semi-circular in cross section.

Even though it is stated above that the groove in the sleeve is short and the stopper is in the form of a corresponding short rod, it will be understood that the groove may be longer and may, e.g., be circumferential, extending in a plane which is perpendicular to the longitudinal axis of the boring 4 in the sleeve 6. The stopper may be designed correspondingly long and possibly as a ring which is split axially, i.e. parallel to an axis which is perpendicular to the plane in which the ring extends. In order for the ring in the latter case to be inserted into the groove, the ring must not be so long that its ends come into mutual abutment when it is inserted into the groove 8, 32, 54. When the annular stopper is extended between the pin and the tension element, it is expanded and pushed radially outwards in the groove.

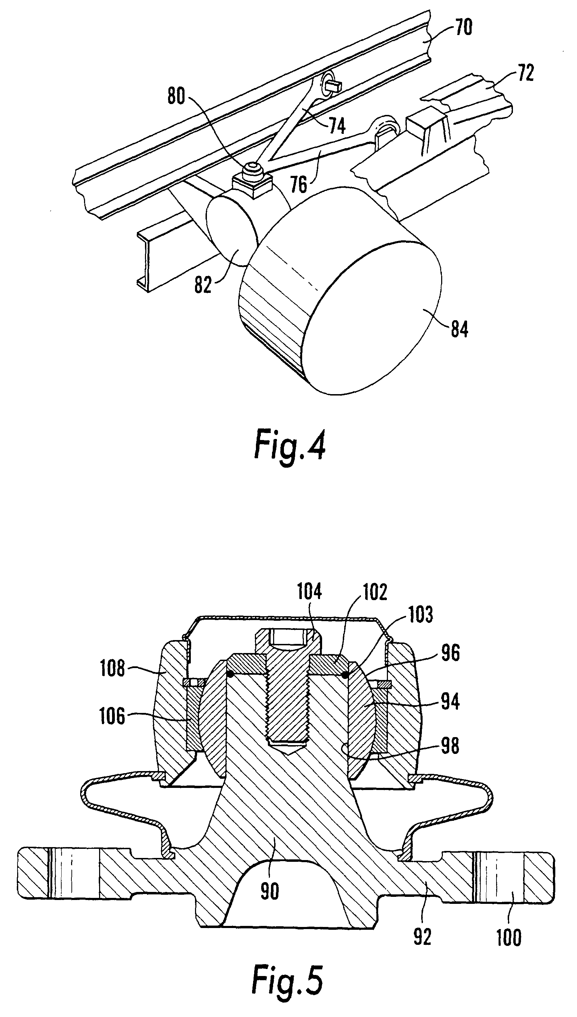

Fig. 4 is a perspective view of a section of a chassis of a vehicle. Two U-beams 70, 72 of the chassis extend parallel to each other in the vehicle's longitudinal direction. Two arms 74, 76 are each linked by one end section to a beam 70, 72. The arms extend slantingly in relation to the beams and their second end section is securely connected to a joint member of a universal joint 80. The universal joint's second joint member is securely connected to a central section of a wheel axle housing 82 which supports wheels 84.

The invention as defined in claim 1 is specially designed with a view to use in connection with such a universal joint, and an embodiment of this is illustrated in fig. 5.

As illustrated in fig. 5 a pin 90 is made in one piece with a flange 92 via which the pin 90 can be securely connected to the wheel axle housing 82 illustrated in fig. 4, e.g. by means of screws (not shown) which can be passed through holes 100. The pin 90 is inserted into a boring 98 of a sleeve-shaped, inner bearing cup 94 with an outer surface 96 which is designed as a section of a surface of a ball. In the boring 98 there is provided a circumferential groove, which is approximately semi-circular in cross section, in which there is inserted a wire ring, whose wire cross section is approximately correspondingly circular. A tension element 102 is tightened or pressed towards this by means of a screw 104 which is screwed into a hole in the pin 90. The wire ring is thereby clamped between the pin and the tension element and hereby forced radially outwards relative to the boring 98 and into the groove, thus preventing an axial movement of the bearing cup 94 relative to the pin 90 as well as a relative rotation of these parts.

Radially outside the bearing cup 94 there is provided an outer bearing cup 106 complementarily formed in relation thereto, which cup is axially secured in an associated housing 108 which in turn is connected to the second end sections of the arms 74, 76.

Thus with this universal joint no shoulders, rings or the like require to be provided on the pin against which the housing 108 can abut when it is tilted relative to the pin 90, with the result that the housing's maximum tilting angle can be large. Moreover, the transitional section between the cylindrical pin section and the flange 92 can be without notch-forming sections, thus avoiding tension concentrations which can easily lead to cracks in the pin. Since the device permits the use of an inner bearing cup with a cylindrical boring, cheap, standardised ball joints which exist in the trade can be employed.

## Claims

1. Use of a device comprising a first and a second object,
- wherein the first object has a pin (2;40;56;90), whose free end section projects into a hole (4;98) of the second object, and the device impedes axial relative movement of the pin (2;40;56;90) in the hole (4;98), where there is provided in the hole wall a groove (8;32;54) which extends along a transverse plane in relation to the hole's (4;98) longitudinal axis and is tapered in the direction away from the hole (98), in which groove there is inserted a stopper (10;30;50) with a first section (12;34) which projects into the groove (8;32;54), and a second section (16;44) which projects away from the groove (8;32;54) and into the hole (4;98), and the first object further comprises an element (20;42;58) which may be tightened axially towards the end section, and the pin (2;40;56;90) and the element (20;42;58) near the hole wall have mutually opposing edge areas, which are arranged to abut against the stopper and, by drawing together the element (20;42;58) and the pin (2;40;56;90), to securely clamp between them the second section (16;44) of the stopper (10;30;50), at least one of the edge areas being chamfered in such a manner that it extends away from the opposite edge area and towards the hole wall, when the pin (40;56;90) and the element (42;58) are disposed in the hole,
- wherein the said objects are components of a first, inner joint member of a universal joint (80) connecting arms (74,76) which are connected to a chassis (70;72) of a vehicle, with a wheel axle (82) of the vehicle for lateral securing of the axle (82) relative to the chassis (70;72), where the outer surface of the second object is convex and is in the form of a portion of a ball surface (96).

## Patentansprüche

1. Verwendung einer Einrichtung, die einen ersten und einen zweiten Gegenstand aufweist,
- wobei der erste Gegenstand einen Zapfen (2; 40; 56; 90) aufweist, dessen freier Endbereich in ein Loch (4; 98) des zweiten Gegenstands ragt, und wobei die Einrichtung eine axiale Relativbewegung des Zapfens (2; 40; 56; 90) In dem Loch (4; 98) hemmt, wobei in der Lochwand eine Nut (8; 32; 54) vorgesehen ist, die sich entlang einer Querebene in bezug auf die Längsachse des Loches (4; 98) erstreckt und in der von dem Loch (98) wegführenden Richtung verjüngt ist, wobei in die Nut ein Stopper (10; 30; 50) eingesetzt ist mit einem ersten Bereich (12; 34), der in die Nut (8; 32; 54) ragt, und mit einem zweiten Bereich (16; 44), der von der Nut (8; 32; 54) weg und in das Loch (4; 98) ragt, und wobei der erste Gegenstand ferner ein Element (20; 42; 58) aufweist, das in Axialrichtung zu dem Endbereich hin angezogen werden kann, und wobei der Zapfen (2; 40; 56; 90) und das Element (20; 42; 58) nahe der Lochwand einander gegenüberliegende Randbereiche haben, die so angeordnet sind, daß sie an dem Stopper anliegen und durch Zusammenziehen des Elements (20; 42; 58) und des Zapfens (2; 40; 56; 90) den zweiten Bereich (16; 44) des Stoppers (10; 30; 50) fest zwischen einander einspannen, wobei mindestens einer der Randbereiche derart abgeschrägt ist, daß er sich von dem gegenüberliegenden Randbereich weg und zu der Lochwand hin erstreckt, wenn der Zapfen (40; 56; 90) und das Element (42; 58) in dem Loch angeordnet sind,
- wobei die genannten Gegenstände Komponenten eines ersten, inneren Gelenkelements eines Universalgelenks (80) sind, das Arme (74, 76), die mit einem Fahrwerk (70; 72) eines Fahrzeugs verbunden sind, mit einer Radachse (82) des Fahrzeugs verbindet, um die Achse (82) relativ zu dem Fahrwerk (70, 72) seltlich zu befestigen, wobei die äußere Oberfläche des zweiten Gegenstands konvex und in Form eines Teils einer Kugeloberfläche (96) ausgebildet ist.

## Revendications

1. Utilisation d'un dispositif comprenant un premier objet et un second objet,
- dans lequel le premier objet présente une tige (2 ; 40 ; 56 ; 90) dont la section d'extrémité libre est en saillie dans un trou (4 ; 98) du second objet, et le dispositif empêche un mouvement relatif axial de la tige (2 ; 40 ; 56 ; 90) dans le trou (4 ; 98), où il est prévu dans la paroi du trou une gorge (8 ; 32 ; 54) qui s'étend le long d'un plan transversal par rapport à l'axe longitudinal du trou (4 ; 98) et est à section décroissante dans le sens qui s'éloigne du trou (98), dans laquelle gorge est inséré une butée (10 ; 30 ; 50) possédant une première section (12 ; 34) qui est en saillie dans la gorge (8 ; 32 ; 54) et une seconde section (16 ; 44) qui fait saillie dans le sens qui s'éloigne de la gorge (8 ; 32 ; 54) et dans le trou (4 ; 98), et le premier objet comprend en outre un élément (20 ; 42 ; 58) qui peut être serré axialement vers la section d'extrémité, et la tige (2 ; 40 ; 56 ; 90) et l'élément (20 ; 42 ; 58) possèdent, à proximité de la paroi du trou, des zones de bord mutuellement opposées qui sont agencées pour buter contre la butée et par les attirer l'un vers l'autre, pour serrer de manière fixe entre eux la seconde section (16 ; 44) de la butée (10 ; 30 ; 50), au moins l'une des zones de bord étant chanfreinée de manière qu'elle s'étende en s'éloignant de la zone de bord opposée et en se dirigeant vers la paroi du trou lorsque la tige (40 ; 56 ; 90) et l'élément (42 ; 58) sont disposés dans le trou,
- dans lequel lesdits objets sont les composants d'un premier élément, ou élément intérieur, d'un joint universel (80) qui relie des bras (74, 76) qui sont reliés à un châssis (70 ; 72) d'un véhicule, à un axe de roue (82) du véhicule pour immobiliser latéralement l'axe (82) par rapport au châssis (70 ; 72), où la surface externe du second objet est convexe et se présente sous la forme d'une portion d'une surface de rotule (96).
